Europäisches Patentamt

(19) European Patent Office

Office européen des brevets

(11) Numéro de publication : **0 320 319 B1**

(12) **FASCICULE DE BREVET EUROPEEN**

(51) Int. Cl.⁵ : **B62B 3/00,** B62B 3/02, A47B 55/02

(45) Date de publication du fascicule du brevet :
17.04.91 Bulletin 91/16

(21) Numéro de dépôt : 88402631.1

(22) Date de dépôt : 19.10.88

(54) **Chariot comportant des panneaux métalliques amovibles et qui est destiné au transport de produits divers.**

(30) Priorité : 09.12.87 FR 8717134

(43) Date de publication de la demande :
14.06.89 Bulletin 89/24

(45) Mention de la délivrance du brevet :
17.04.91 Bulletin 91/16

(84) Etats contractants désignés :
BE DE ES IT LU NL

(56) Documents cités :
BE-A- 773 915
FR-A- 2 062 882
GB-A- 1 522 774
US-A- 3 920 260

(73) Titulaire : ATELIERS REUNIS CADDIE
13, rue de la Mairie
F-67300 Schiltigheim (FR)

(72) Inventeur : Le Marchand, Alain
1, rue de Vendée
F-67116 Reichstett (FR)
Inventeur : Frey, Jean-Pierre
32, rue Molkenbronn
F-67380 Lingolsheim (FR)

(74) Mandataire : Tony-Durand, Serge
Cabinet Tony-Durand 77, rue Boissière
F-75116 Paris (FR)

EP 0 320 319 B1

## Description

La présente invention est relative aux chariots destinés au transport de produits divers, et qui comportent deux parois latérales, constituées chacune par une grille formée par des fils métalliques entrecroisés.

En général les chariots de ce genre comportent des panneaux amovibles, également formés par des grilles métalliques, et qui sont destinés à fermer leurs parois avant et arrière, lors du transport de certains produits. Par ailleurs certains de ces chariots sont également équipés d'étagères intérieures amovibles. Celles-ci sont alors pourvues de crochets à leurs extrémités de façon à pouvoir être accrochées sur les fils horizontaux des grilles constituant les parois latérales. Ces étagères peuvent être utilisées pour le rangement de certaines marchandises lors de leur transport. Par contre, pour le transport de produits en vrac, ces étagères sont démontées et les panneaux de fermeture sont rapportés sur les parois avant et arrière pour constituer une cage fermée. Cette solution a l'avantage de permettre la transformation des chariots suivant le type des marchandises à transporter.

Cependant les utilisateurs doivent prendre soin de ne pas égarer les éléments démontés, en l'occurrence les étagères ou bien les panneaux de fermeture, lorsque l'une ou l'autre de ces deux catégories d'éléments n'est pas utilisée. Ceci constitue donc une contrainte gênante et il arrive très fréquemment que ces éléments démontables soient égarés et qu'ils ne puissent pas être retrouvés au moment où il serait nécessaire de pouvoir les employer.

C'est pourquoi la présente invention a pour but de réaliser un chariot transformable du même type général mais dont la conception est telle qu'une même série d'éléments puisse constituer, suivant le cas, les étagères intérieures démontables ou les panneaux de fermeture de l'une au moins des parois avant et arrière.

A cet effet ce chariot est caractérisé en ce que les étagères intérieures de ce chariot sont constituées par des éléments amovibles pouvant également être disposés verticalement pour constituer un élément de fermeture de la face avant, et éventuellement de la face arrière de ce chariot, et près de l'un au moins de leurs bords verticaux, les parois latérales du chariot comportent, dans l'espace libre formé par plusieurs mailles de chacune des grilles constituant ces parois, un élément saillant de retenue ne laissant subsister, par rapport au montant du bord correspondant, qu'un intervalle limité permettant d'y introduire l'un des crochets d'extrémité d'un élément amovible susceptible de servir d'étagère. Il est donc possible de fixer cet élément verticalement entre les deux parois latérales en accrochant ses crochets d'extrémités sur les éléments saillants de retenue ainsi prévus, ou sur les fils horizontaux adjacents, de façon à constituer avec deux éléments, ou plus, une paroi de fermeture, l'écart vertical existant entre deux éléments saillants de retenue correspondant à l'écart entre les crochets d'extrémité des éléments amovibles d'étagères.

Selon une autre caractéristique, chaque élément saillant de retenue, prévu près de l'un des bords verticaux de chaque paroi latérale, est conformé de façon à laisser libre la partie supérieure de la maille de la grille métallique correspondante à l'intérieur de laquelle est situé cet élément.

Dans ces conditions, les éléments servant d'étagères peuvent être utilisés pour une seconde fonction, à savoir celle de constituer, tout au moins en partie, une paroi verticale de fermeture. Ainsi ces éléments sont utilisés à deux fins, ce qui évite à l'utilisateur d'un tel chariot d'avoir à posséder par ailleurs des panneaux amovibles de fermeture. Il en résulte donc une économie relativement importante. Par ailleurs ceci évite le risque de perte des éléments amovibles de transformation du chariot puisque ces éléments servent dans l'une et l'autre formes d'utilisation de celui-ci.

Cependant d'autres particularités et avantages du chariot transformable selon l'invention apparaitront au cours de la description suivante. Celle-ci est donnée en référence au dessin annexé à simple titre indicatif, et sur lequel :

Les figures 1 et 2 sont des vues en perspective représentant un chariot selon l'invention dans l'une et l'autre de ses deux formes de réalisation, c'est-à-dire respectivement avec des étagères horizontales intérieures et avec des éléments verticaux de fermeture sur le devant.

La figure 3 est une vue partielle en perspective illustrant le mode de fixation des éléments d'étagère lorsque ceux-ci sont utilisés comme éléments verticaux de fermeture d'une paroi.

La figure 4 est une vue similaire illustrant une variante de réalisation.

Les figures 5 à 9 sont des vues similaires illustrant d'autres variantes encore de réalisation.

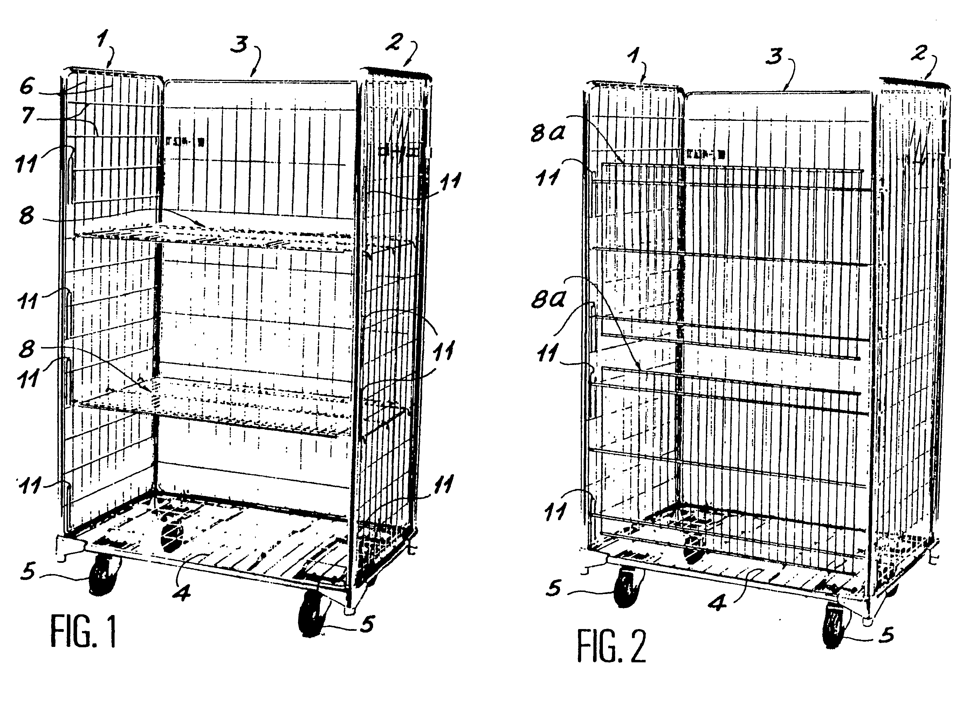

Dans l'exemple représenté aux figures 1 à 3, le chariot transformable selon l'invention comporte deux parois latérales 1 et 2 réunies par une paroi verticale arrière 3. Ces trois parois verticales, qui forment une cage ouverte sur le devant, s'étendent au dessus des côtés d'un fond horizontal 4 monté sur des roulettes 5. Chacune de ces parois est constituée par une grille formée par des fils métalliques entrecroisés 6 et 7 s'étendent respectivement dans le sens vertical et dans le sens horizontal, chacune de ces grilles étant entourée par un cadre en tube métallique.

Il est par ailleurs prévu deux éléments amovibles 8, ou plus, qui sont susceptibles de servir d'étagères horizontales entres les parois latérales. Chacun de ces éléments est constitué par une grille en fil métallique dont les extrémités comportent des crochets 9 susceptibles d'être accrochés sur des fils horizontaux transversaux 7 des grilles constituant les parois latérales. Dans l'exemple représenté, ces crochets sont constitués par des extensions coudées de fils 10 formant les longerons sur chaque élément 8 d'étagère. Du fait de l'agencement prévu ces éléments peuvent être fixés en des niveaux différents et on peut ainsi monter un nombre plus ou moins grand d'étagères entre les parois latérales 1 et 2.

Près de la face avant, les parois latérales 1 et 2 comportent, dans l'espace libre formé par plusieurs mailles de chacune des grilles constituant ces parois, un élément saillant de retenue 11 ne laissant subsister, par rapport au montant 12 du bord vertical correspondant, qu'un intervalle limité permettant d'y introduire l'un des crochets d'extrémité 9 d'un élément d'étagère 8 après avoir disposé celui-ci verticalement sur le devant du chariot, comme décrit plus en détail par la suite. Par ailleurs, chacun de ces éléments de retenue laisse subsister, au dessus de lui, un intervalle E dans la maille de la grille à l'intérieur de laquelle est situé cet élément.

Dans l'exemple représenté aux figures 1 à 3, chaque élément de retenue ainsi prévu est constitué par une épingle en fil métallique dont la branche médiane constitue l'extrémité supérieure saillante, cependant que ses branches latérales sont disposées verticalement et fixées par soudure sur des fils horizontaux 7 de la grille constituant la paroi latérale correspondante.

Il convient de noter que l'écart vertical existant entre deux éléments saillants successifs de retenue 11, ou plus exactement entre les fils horizontaux 7a sur lesquels est fixée l'extrémité supérieure de ces éléments, correspond à l'écart L entre les longerons 10 des éléments d'étagère 8 qui comportent les crochets d'extrémité 9. Dans l'exemple représenté aux figures 1 et 2, il est prévu, près du bord avant des deux parois latérales, deux groupes de deux éléments saillants de retenue 11 et dans chaque groupe les deux éléments de retenue correspondant présentent entre eux un tel écart vertical L.

Dans ces conditions, les deux éléments 8, servant d'étagères dans la forme d'utilisation représentée à la figure 1, peuvent être fixés verticalement sur le devant du chariot dans les positions 8a illustrées à la figure 2 afin de constituer des éléments verticaux de fermeture susceptibles de remplacer un panneau amovible avant.

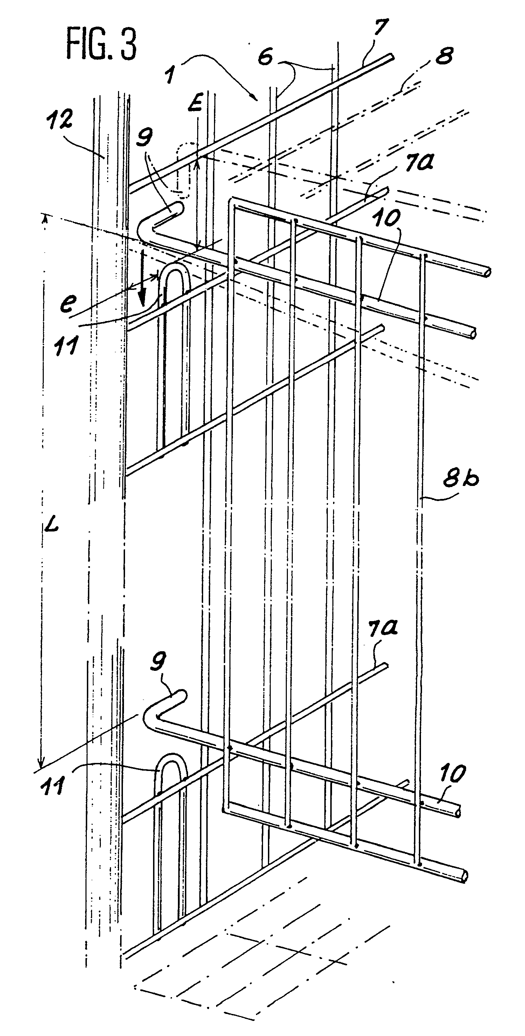

Pour fixer un tel élément 8 sur le devant du chariot, il convient de le présenter verticalement, puis d'engager ses crochets 9 d'extrémité dans les mailles des grilles latérales à l'intérieur desquelles sont prévus les éléments de retenue 11, et ce en introduisant ces crochets dans la partie supérieure de ces mailles, comme illustré sur la figure 3 pour l'élément représenté dans la position 8b. Lorsque les crochets 9 sont ainsi placés à l'extérieur du plan formé par chaque grille latérales 1 ou 2, il suffit de laisser descendre l'élément 8 considéré de façon que ses crochets 9 viennent dans les intervalles e pour reposer sur les fils horizontaux 7a des grilles latérales. Les crochets 9 se trouvent alors accrochés contre la partie extérieure des éléments saillants 11 de retenue, ce qui assure une parfaite immobilisation en place des éléments 8 qui servent alors d'éléments verticaux de fermeture.

Comme on peut le constater, la manoeuvre de mise en place et de fixation des éléments 8 sur la paroi avant est très facile à réaliser. Par ailleurs, les éléments de fermeture ainsi fixés ne risquent pas de se dégager de façon intempestive lors du transport du chariot, par exemple sous l'effet de chocs ou de trépidations. Cependant le démontage ultérieur des éléments 8 est tout aussi facile à réaliser, pour pouvoir avoir accès à l'intérieur des chariots et éventuellement pour utiliser à nouveau ces éléments comme étagères intérieures.

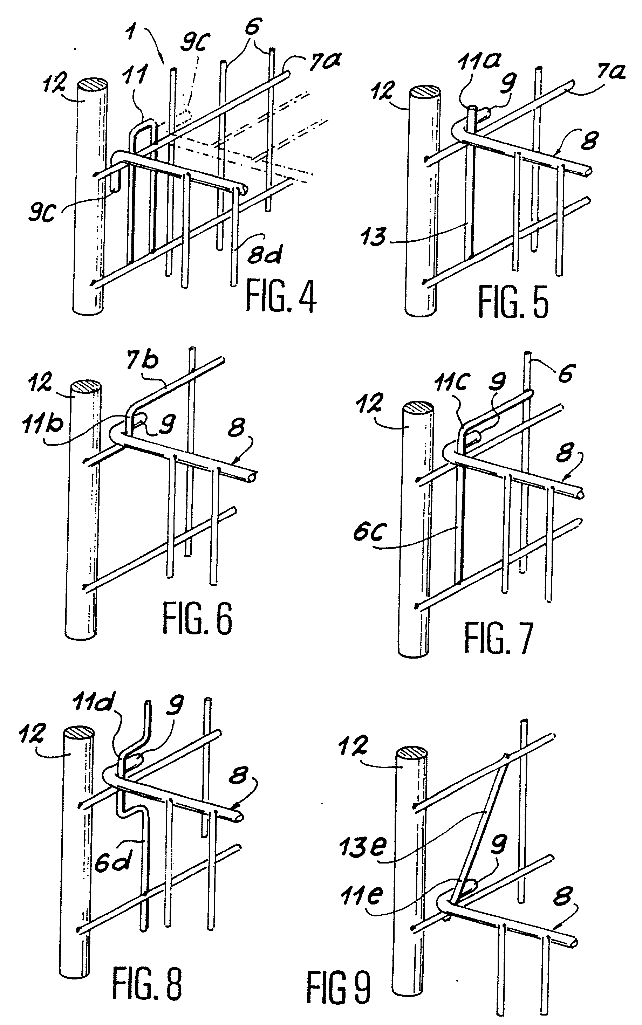

La figure 4 illustre une variante de réalisation dans laquelle les crochets 9c des éléments d'étagères 8 correspondants sont coudés dans le plan de chacun de ces éléments, et non plus à angle droit par rapport à ce plan. Dans un tel cas ces éléments peuvent tout aussi bien être disposés verticalement sur le devant du chariot dans la position 8d illustrée sur la figure 4.

Les figures 5 à 9 illustrent d'autres variantes de réalisation dans chacune desquelles les crochets 9 prévus aux extrémités des éléments 8 d'étagères sont coudés à angle droit par rapport au plan de chacun de ces éléments, de même que dans la forme de réalisation selon les figures 1 à 3. Cependant ces diverses variantes se différencient de cette forme de réalisation par le fait que les éléments saillants de retenue sont réalisés de façon différente.

Ainsi, dans le cas illustrée à la figure 5, chaque élément 11a de retenue est constitué par l'extrémité supérieure saillante d'un tronçon de fil 13 disposé verticalement.

Dans la variante représentée à la figure 6, chaque élément saillant de retenue est constitué par un coude 11b prévu sur l'un des fils horizontaux 7b de chaque grille latérale 1 ou 2.

Dans la variante illustrée à la figure 7, chaque élément saillant de retenue est constitué par un coude 11c prévu à l'extrémité supérieure d'un fil vertical supplémentaire 6c de la grille correspondante. L'extrémité supérieure de ce fil supplémentaire est alors soudée sur l'un des fils verticaux normaux 6 de cette même grille.

Dans la variante représentée à la figure 8, chaque élément saillant de retenue 11d correspondant est constitué par un coude prévu sur l'un des fils verticaux 6d de la grille latérale correspondante.

Enfin dans la variante représentée à la figure 9, chaque élément saillant de retenue correspondant 11e est constitué par l'extrémité inférieure d'un fil supplémentaire 13e qui est disposé en diagonale vers l'arrière afin de dégager l'espace situé au dessus de la partie de ce fil qui sert à l'accrochage du crochet 9 d'un élément amovible 8.

Cependant les éléments de retenue ainsi prévu pourraient être réalisés de diverses autres façon encore pour autant que ceux-ci répondent aux conditions précédemment définies. Par ailleurs, au lieu de comporter une seule face ouverte, comme dans l'exemple représenté aux figures 1 et 2, le chariot selon l'invention pourrait être ouvert à la fois sur l'avant et sur l'arrière. Dans un tel cas les parois latérales 1 et 2 comporteraient des éléments saillants de retenue 11, 11a, 11b...11e à la fois près de leur bord vertical avant et près de leur bord vertical arrière, afin de permettre la fermeture des faces avant et arrière au moyen d'éléments amovibles 8 susceptibles de servir non seulement d'étagères, mais également d'éléments verticaux de fermeture.

## Revendications

1. Chariot destiné au transport de produits divers, et comportant deux parois latérales, constituées chacune par une grille formée par des fils métalliques entrecroisés et entre lesquelles sont disposées des étagères démontables présentant, à leurs extrémités, des crochets permettant leur accrochage sur des fils horizontaux des parois latérales, caractérisé en ce que :

    – ces étagéres sont constituées par des éléments amovibles (8, 8c) pouvant également être disposés verticalement pour constituer un élément de fermeture de la face avant, et éventuellement de la face arrière de ce chariot,

    – et près de l'un au moins de leurs bords verticaux, les parois latérales (1, 2) comportent, dans l'espace libre formé par plusieurs mailles de chacune des grilles constituant ces parois, un élément saillant de retenue (11, 11a, 11b, 11c, 11d, 11e) ne laissant subsister, par rapport au montant (12) du bord correspondant, qu'un intervalle limité (e) permettant d'y introduire l'un des crochets d'extrémité (9, 9a) d'un élément amovible (8, 8c) susceptible de servir d'étagère, afin de fixer cet élément verticalement entre les deux parois latérales en accrochant ses crochets d'extrémités (9, 9a) sur les éléments saillants de retenue (11, 11a, 11b, 11c, 11d, 11e) ainsi prévus, ou sur les fils horizontaux adjacents (7a), de façon à constituer avec deux éléments (8, 8c), ou plus, une paroi de fermeture, l'écart vertical existant entre deux éléments saillants de retenue (11, 11a, 11b, 11c, 11d, 11e) correspondant à l'écart L entre les crochets (9) des extrémités des éléments amovibles (8, 8c).

2. Chariot selon la revendication 1, caractérisé en ce que chaque élément saillant de retenue (11, 11a, 11b, 11c, 11d, 11e), prévu près de l'un des bords verticaux de chaque paroi latérale (1, 2), est conformé de façon à laisser libre la partie supérieure de la maille de la grille métallique correspondante à l'intérieur de laquelle est situé cet élément.

## Ansprüche

1. Handwagen für den Transport von verschiedenen Produkten mit zwei Seitenwänden, die jeweils ein Gitter aus sich kreuzenden Metallstäben aufweisen und zwischen denen einfach entfernbare Etagenböden angeordnet sind, wobei die Etagenböden an ihren Rändern Haken zur Anlage an den horizontalen Metallstäben der Seitenwände aufweisen, dadurch gekennzeichnet, daß die Etagenböden als bewegliche Elemente ausgebildet sind, die außerdem zur Bildung eines Verschließelements für die Vorderseite oder die Rückseite des handwagens vertikal anbringbar sind, und daß die Seitenwände (1, 2) an mindestens einer ihrer vertikalen Kanten in einem mehrere Maschen des jeweiligen die Seitenwände bildenden Gitters umfassenden Freiraum ein vorstehendes Rückhalteelement (11) aufweisen, welches relativ zu einem Randpfosten (12) einen definierten Bereich zum Einführen eines randseitigen Hakens (9, 9a) eines beweglichen Elements (8, 8c), das als Etagenboden dienen kann, abgrenzt, um das Element vertikal zwischen den zwei Seitenwänden durch Anlage dessen randseitiger Haken (9, 9a) an den dafür vorgesehenen, vorstehenden Rückhalteelementen (11, 11a, 11b, 11c, 11d, 11e) oder dem angrenzenden, horizontalen Metallstab zu fixieren, wobei zwei oder mehrere Elemente (8, 8c) eine abschließende Wand bilden und wobei der zwischen zwei vorstehenden Rückhalteelementen (11, 11a, 11b, 11c, 11d, 11e) auftretende vertikale Abstand auf den Abstand zwischen den randseitigen Haken der beweglichen Elemente abgestimmt ist.

2. Handwagen nach Anspruch 1, dadurch gekennzeichnet, daß jedes an einer vertikalen Kante jeder Seitenwand (1, 2) vorgesehene, vorstehende Rückhalteelement (11, 11a, 11b, 11c, 11d, 11e) derart gestaltet ist, daß es den oberen Bereich der entsprechenden Masche des metallischen Gitters frei läßt, in deren Inneren dieses Element angeordnet ist.

## Claims

1. Carriage for transporting various products and having two side walls which are constituted in each case by a grid formed by crossed wires and between which are disposed detachable shelves provided at their extremities with hooks for fastening them on horizontal wires of the side walls, characterized in that :

– said shelves are constituted by removable elements (8, 8c) which can also be disposed vertically so as to constitute an element for closing the front face and if necessary the rear face of said carriage,

– and in proximity to at least one of their vertical edges, the side walls (1, 2) are provided within the free space formed by several meshes of each of the grids constituting said walls with a projecting retaining element (11, 11a, 11b, 11c, 11d, 11e) which allows only a limited interval (e) to remain with respect to the upright member (12) of the corresponding edge so as to make it possible to introduce therein one of the end hooks (9, 9a) of a removable element (8, 8c) which is capable of serving as a shelf in order to fix said element vertically between the two side walls by fastening its end hooks (9, 9a) on the projecting retaining elements (11, 11a, 11b, 11c, 11d, 11e) thus provided or on the adjacent horizontal wires (7a) so as to constitute a closure wall with two or more elements (8, 8c), the vertical distance existing between two projecting retaining elements (11, 11a, 11b, 11c, 11d, 11e) corresponding to the distance L between the hooks (9) of the ends of the removable elements (8, 8c).

2. Carriage in accordance with claim 1, characterized in that each projecting retaining element (11, 11a, 11b, 11c, 11d, 11e) provided in proximity to one of the vertical edges of each side wall (1, 2) is shaped so as to leave free the top portion of the mesh of the corresponding wire grid within which said element is located.

FIG.2

FIG.1

FIG. 3

FIG. 4

FIG. 5

FIG. 6

FIG. 7

FIG. 8

FIG 9